# EUROPEAN PATENT APPLICATION

(11) **EP 3 028 848 A1**
(43) Date of publication of application: **08.06.2016**
(21) Application number: 14004072.6
(22) Date of filing: 03.12.2014
(51) Int. Cl.: B32B 11/00, C09D 195/00, C09J 195/00, C08L 61/00, C08L 95/00, C08L 91/06, C08K 3/34, C08K 5/01, C08K 5/09, D06N 5/00

(54) **LAYERED MATERIALS AND THEIR USE**

(71) Applicant: surfactor Germany GmbH, 45141 Essen (DE)
(72) Inventor: Lipponen, Juha, 82500 Kitee (FI); Silventoinen, Ilpo, 59800 Kesälahti (FI)
(74) Representative: von Renesse, Dorothea

(57) **Abstract**

The present invention relates to a novel layered material, its production and use.

## Description

### FIELD OF THE INVENTION

The present invention relates to layered materials, in particular to a composite, with improved properties.

### BACKGROUND OF THE INVENTION

Various methods in the treatment and coating of wood products (such as plywood, chipboard, fibre board and OSB products and the like) are known. Often the coatings comprise resin with different additives. Typically, phenolic resin, amino resin or equivalent resins or mixtures thereof are used.

During processing, storage or use the service value of such wood products such as wood-based panels is reduced if holes appear in the coating resulting from said processing or use. In this case, the wood product could easily absorb moisture from the air or water, for example from wet concrete in connection with casting. From the holes, the moisture can easily spread in the direction of the wood grains and cause local swelling of the grains, i.e. rippling, and thereby blistering of the surface of the wood product. The latter is often accompanied by a reduced adhesion as well as an increased risk of cracking of respective wood product surfaces leading to wood products with significantly reduced service durability and undesirable appearance.

The objective of the invention is to mitigate at least one of these drawbacks referred to above. In particular, it is an object of the invention to suggest a novel method for treatment of wood products to provide wood boards of improved quality, especially wood products having improved surface properties.

### SUMMARY OF THE INVENTION

This problem is solved by providing a layered material according to claim 1. Preferred embodiments of the invention are subject matter of dependent claims.

The inventors have found that a layered material comprising a first carrier material with a modified bitumen and a second carrier material, wherein said first carrier material and said second carrier material are continuously attached to each other, is particularly suitable for treating, composing and processing wood products. According to the present invention, the bitumen is modified by adding an agent selected from the group consisting of wax, in particular paraffin, silicone oil, stearic acid, alkene ketene dimer (AKD), alkenyl succinic anhydride (ASA) and mixtures thereof. According to the present invention, said bitumen is hereinafter also called "modified bitumen".

The attachment of said first carrier material and said second carrier material can either be directly or indirectly, the later meaning that one or more further layers can form intermediate layers between the first and the second carrier material. In such embodiments, the first carrier material and the second carrier material are not directly in contact. In a most preferred embodiment of the invention, the first carrier material and the second carrier material form a composite material.

Coating or saturating the first carrier material with the modified bitumen (bitumization) allows for improved surface properties of the resulting layered material, which most preferably is a wood product. The term "surface properties" used according to the present invention refers to properties which are of particular importance for the quality and service durability of surface structures and coatings in general, especially wood surface structures, and includes cracking, adherence and water resistance, i.e. in particular rippling.

The inventors found that a bitumen which is modified with an agent selected from the group consisting of wax, in particular paraffin, silicone oil, stearic acid, alkene ketene dimer (AKD), alkenyl succinic anhydride (ASA) and mixtures thereof unexpectedly allowed for layered materials of superior quality, especially layered materials providing further improved surface properties, in particular further increased water resistance and adhesion. The resulting layered materials, hence, allow for an increased service durability of resulting wood products even under harsh conditions of handling and use while maintaining the desired appearance.

Preferably, a reduction of rippling, in particular of the second carrier material, of usually at least 25%, preferably of at least 30%, more preferably of at least 40% and, in particular, of at least 50% is obtainable with the layered materials using a modified bitumen according to the invention. More preferably, a reduction in rippling of at least 60% and most preferably of at least 70% and further preferred of at least 80% is obtainable with the layered materials using a modified bitumen according to the invention. Rippling can be evaluated by measuring the length of swollen fibers (whiskers) around a hole within the layered material with a depth of at least 0.5 mm after applying a wet paper towel or cloth on top of the hole for at least 2 hours, wherein the paper towel or cloth is kept wet during the test. The obtained result is given as the length in mm of swelled wood grains around said hole: (diameter of the swelling area - diameter of said hole) = rippling result. Reduction of rippling can be measured by calculating the rippling of the layered material according to the invention compared to a reference sample on the same piece of plywood as a second carrier material. Reduced rippling reduces risk of cracking of surface in case the wood surface is damaged and the layered material, in particular the second carrier material such as a wood-based panel or a wood-based veneer, is exposed to moisture. Service life of resulting wood product is increased due to less swelling and shrinkage caused by cyclic moisture exposure.

According to the invention the modified bitumen applied to the first carrier material can act as a blocking layer which reduces or prevents moisture transfer. Besides, adhesion of the components of the layered material according to the present invention, especially adhesion between the first carrier material and the second carrier material, can be improved and cracking can be reduced by using the modified bitumen when composing, processing or treating said wood products.

Furthermore, the bitumization of the first carrier material can result in an advantageous flexibility of the layered material according to the present invention. It can increase the strength during drying and later handling and use of the resulting wood product, such as veneer product, but at the same time the wood product can remain sufficiently flexible. It can be handled with a substantially reduced risk of ruptures.

Additionally, the layered material of the invention can exhibit an improved resistance against chemicals.

Furthermore, it was found by the inventors that modified bitumen is compatible with resins, in particular synthetic resins. Synthetic Resins are commonly used in the production of wood products, in particular phenolic or formaldehyde-based resins. Hence in a particularly preferred embodiment of the invention the layered material of the invention further comprises a synthetic resin. The synthetic resin can be applied in a mixture together with the modified bitumen or in a separate step. Then it can form a resin layer. The latter is preferred.

Due to its compatibility with synthetic resin compositions the bitumen can be used to partly or even completely substitute the synthetic resin (preferred phenolic or formaldehyde-based resins) within the layered material according to the present invention. The latter is accompanied by reduced production costs and can further facilitate processing.

### DETAILED DESCRIPTION OF THE INVENTION

According to the invention, a layered material is provided which comprises a first carrier material with a modified bitumen, wherein the first carrier material is coated or saturated with the modified bitumen. Optionally the layered material can further comprise a synthetic resin. The layered material further comprises a second carrier material. The first carrier material and the second carrier material are continuously attached to each other, directly or indirectly. Most preferably, first carrier material and second carrier material form a composite material. According to the present invention, the modified bitumen is a bitumen, to which an agent selected from the group consisting of wax, silicone oil, stearic acid, alkene ketene dimer (AKD), alkenyl succinic anhydride (ASA) and mixtures thereof has been added.

The term "continuously attached" according to the invention is to be understood that substantially the entire surface of the first carrier material is attached to the surface of the second carrier material. A preferred example of continuous attachment is adhering the full area of the surface of the first carrier material to the full area of the surface of the second carrier material. Notably, the attachment can be directly or indirectly, e.g. by using an intermediate layer which continuously adheres to both, the first carrier material and the second carrier material.

When coated or saturated onto the first carrier material the modified bitumen at least partly penetrates into said carrier material. Preferably, it is possible to transfer any desired additives optionally contained in the modified bitumen into the carrier material by way of penetration of the modified bitumen into the first carrier material.

When attaching the first carrier material of the invention to the second carrier material, preferably by hot pressing, preferably at least parts of the modified bitumen penetrate into the second carrier material, which is preferably a wood product. Bitumen can penetrate along the wood grain pattern. Depending on the wood species, on the modified bitumen used and on the processing conditions the modified bitumen can penetrate e.g. 1 mm into birch or 3 mm into spruce wood products. Preferably, a penetration depth of the modified bitumen into the second carrier material of at least 0.1 mm, more preferably of at least 0.2 mm, further preferably of at least 0.4 mm and more preferred of at least 0.5 mm is obtained. In most preferred embodiments, the penetration depth of modified bitumen into the second carrier material is at least 1 mm, in particular at least 3 mm.

In a preferred embodiment, in which the second carrier material is selected from a wood-based veneer, it is most preferred that the penetration depth of the modified bitumen into the second carrier material corresponds to at least 10%, more preferably at least 25% and most preferably at least 50% and in particular at least 95% of the thickness of the second carrier material. In especially preferred embodiments, the penetration depth of the modified bitumen into the second carrier material selected from a wood-based veneer corresponds to at least 98% and more preferably 100% of the thickness of the second carrier material, i.e. the modified bitumen even penetrates 100% of the second carrier material.

The term "composite material" designates a material formed by at least two constituent materials. The composite material exhibits different physical or chemical properties like the separate constituting materials. After finishing, the composite material cannot be separated into the constituting materials without destruction. Hence the constituting materials form a new entity.

The term "hot pressing" is well known to the skilled person in the art and generally refers to the concomitant application of heat and pressure. According to the present invention, hot pressing preferably refers to the concomitant application of pressures between 3 bar and 35 bar, preferably of between 5 bar and 25 bar, along with temperatures of between 90°C and 400°C, preferably of between 100°C and 200°C.

The terms "coating" and "saturating" are known to the skilled person in the art, too. Coating preferably means the application of a composition which forms a layer on the material to be coated, for example, the first carrier material. Hence, the composition which is applied preferably essentially remains on the surface of the material to be coated. Preferably, coating means that less than 40% by weight, more preferably less than 35% by weight, further preferably less than 30% by weight and most preferably less than 20% by weight of the composition penetrates into the material to be coated. With the coating, i.e. preferably with the formed layer, preferably at least 5 g/m², in particular at least 8 g/m² and more preferably at least 10 g/m² in a weight per unit area of composition may be applied onto one side or on one side and the opposite side of the material onto which the coating is to be applied.

"Saturation" with a composition preferably means that the material to be saturated is brought into contact with the composition, wherein the composition essentially penetrates into the material to be saturated, i.e. does essentially not remain on the surface of the material. Preferably, saturating means that more than 60% by weight, more preferably more than 65% by weight, further preferably more than 70% by weight and most preferably more than 80% by weight of the composition penetrates into the material to be saturated with said composition. More preferably, more than 90% by weight and further preferred more than 95% by weight penetrates into the material to be saturated with said composition. In particular embodiments even between 98% by weight and 100% by weight of the composition penetrates into the material to be saturated. Preferably, at least 15 g/m², in particular at least 20 g/m² in a weight per unit area of composition is applied to one side or to said side and the opposite side of the material to be saturated with the composition, preferably to one side of the material.

"Bitumen" as used according to the present invention is a generic term for oil based semisolid hydrocarbon products produced by removing the lighter fractions (such as liquid petroleum gas, petrol and diesel) from heavy crude oil during the refining process (distillation). Hence the term "bitumen" always designates a composition, for example in form of a solution. The bitumen used according to the present invention may be selected from the group consisting of hard bitumen, soft bitumen, straight run bitumen, high-vacuum bitumen, industrial bitumen, blown bitumen, blended bitumen, penetration bitumen and any mixtures thereof. Most preferred is blown bitumen.

Unless otherwise explicitly indicated the term bitumen also encompasses "bituminous products", "bitumen preparations" and "bitumen emulsions". Bituminous products and bitumen preparations include cut-back bitumen and fluxed bitumen. Cut-backs are bitumen preparations in which the viscosity of the binder has been reduced by the addition of a volatile solvent, normally derived from petroleum. Typically the solvents used are white spirit and kerosene. Fluxed bitumens are bitumen preparation where the viscosity of the binder has been reduced by the addition of relatively non-volatile oils. Typical fluxants include gas oil and vegetable based oils. Bitumen emulsions are products in which droplets (the dispersed phase) of bitumen are dispersed in an aqueous medium (the continuous phase). The bitumen particle charge can be positive (cationic), negative (anionic), or uncharged (nonionic) depending on the emulsifier employed. Bitumen preparations also encompass products whereby the bitumen is diluted in an organic solvent. When using an emulsifier it is preferred that the emulsifier is selected so that it does not have any negative effect on hygroscopicity of the first and/or the second carrier material. In preferred embodiments, the bitumen is a blown bitumen.

According to the present invention, the bitumen is modified. The term "modified bitumen" according to the present invention refers to a bitumen, in which an agent selected from the group consisting of wax, in particular paraffin, silicone oil, stearic acid, alkene ketene dimer (AKD), alkenyl succinic anhydride (ASA) and mixtures thereof is added. Hence, bitumen is modified by the inclusion, i.e. addition of at least one of said agents. Consequently, modified bitumen according to the present invention includes, in particular consists of a bitumen and at least one of said agents. The inclusion of at least one of these agents unexpectedly allowed for handling and application characteristics and physical properties of the resulting modified bitumen especially suitable to be used for treating or processing wood products resulting in superior surface properties of the resulting wood products. In especially preferred embodiments, a modified blown bitumen is used.

The amount of the agent added in the bitumen preferably amounts to at least 0.5% by weight, further preferably at least 1% by weight, further preferably at least 1.5% by weight, more preferably at least 1.8% by weight und further preferred at least 2% by weight based on the amount of the modified bitumen. Preferably the amount of agent added in bitumen is at most 40% by weight, further preferred at most 20% by weight und further preferred at most 15% by weight, more preferably at most 12% by weight, in particular at most 10% by weight based on the amount of the modified bitumen. In preferred embodiments, the amount of the agent is between 1% by weight and 20% by weight, preferably between 1.8% by weight and 15% by weight and more preferably between 2% by weight and 10% by weight based on the amount of the modified bitumen. The amount of stearic acid is preferably between 2% by weight and 20% by weight, further preferably between 2% by weight and 5% by weight, in particular 2% by weight based on the amount of the modified bitumen. The amount of silicone oil is preferably between 2% by weight and 20% by weight, further preferably between 2% by weight and 5% by weight, in particular 2% by weight based on the amount of the modified bitumen. The amount of AKD is preferably between 2% by weight and 20% by weight, further preferably between 10% by weight and 20% by weight, in particular 10% by weight based on the amount of the modified bitumen. The amount of ASA is preferably between 2% by weight and 20% by weight, further preferably between 10% by weight and 20% by weight, in particular 10% by weight based on the amount of the modified bitumen.

In one embodiment, bitumen is modified by the addition of wax which is most preferably added in an amount of from 5% by weight to 20% by weight, in particular of 5% by weight, 7% by weight, 10% by weight, 14% by weight or 20% by weight based on the amount of the modified bitumen. In another embodiment, bitumen is modified by the addition of AKD, most preferably AKD is added to bitumen in an amount of 10% by weight based on the amount of the modified bitumen. In still another embodiment, bitumen is modified by the addition of silicone oil, most preferably silicone oil is added to bitumen in an amount of 2% by weight based on the amount of the modified bitumen. In a further embodiment, bitumen is modified by the addition of ASA, most preferably ASA is added to bitumen in an amount of 10% by weight based on the amount of the modified bitumen. In still another embodiment, bitumen is modified by the addition of stearic acid, most preferably stearic acid is added to bitumen in an amount of 2% by weight based on the amount of the modified bitumen.

In preferred embodiments, the bitumen is modified by adding a wax, preferably paraffin, AKD, silicone oil, stearic acid or mixtures thereof, especially preferably by adding paraffin, AKD, silicone oil, stearic acid or mixtures thereof and further preferred by adding paraffin, stearic acid or mixtures thereof. In particular embodiments, the bitumen is modified by adding between 5% by weight and 20% by weight of paraffin based on the amount of the modified bitumen or 2% by weight to 5% by weight of stearic acid based on the amount of the modified bitumen.

Most preferably, the bitumen is modified by the addition of a wax, particularly preferred modified by the addition of paraffin, more preferably paraffin in an amount of from 2% to 20% by weight, in particular of 5% to 15% by weight based on the amount of the modified bitumen. The inventors have found that by using paraffin as an agent to be added to bitumen, especially suitable properties of bitumen including softening point and penetration behaviour can be obtained. This can allow for further facilitation of processing and further improvement of surface properties.

The amount of wax, preferably paraffin, is preferably at least 2% by weight, further preferably at least 4% by weight and most preferably at least 5% by weight based on the amount of the modified bitumen. Preferably, at most 30% by weight and most preferably at most 20% by weight based on the amount of the modified bitumen of wax, preferably paraffin, is used in the modified bitumen. Especially preferably, at most 10% by weight of wax, preferably paraffin, is used in the modified bitumen. Hence in a most preferred embodiment the wax, e.g. paraffin, is present in an amount of between 4% by weight and 20% by weight, in particular, of between 5% by weight and 15% by weight and further preferred of between 5% by and 10% by weight based on the amount of the modified bitumen. Application of wax, in particular paraffin, in such amounts can allow for layered materials with further improved water resistance and surface properties.

Bitumen can also be specified according the DIN norm EN 12591 (version 2009-08). Based on said DIN norm, the bitumen can be classified according to its penetration limits and linked to a specific value of needle penetration. For a needle penetration of 0.1 mm, measured according to DIN EN 12591, the following bitumen grades are known to the skilled person and respective bitumen and/or modified bitumen can be used for the present invention: 250/300, 160/220, 100/150, 70/100, 50/70, 40/60, 35/50, 30/45 and 20/30. The modified bitumen according to the invention preferably exhibits a softening temperature range of 8°C. In an alternative embodiment, the modified bitumen is restricted to a softening temperature range of 6°C.

In a preferred embodiment of the invention, the modified bitumen has a softening point between 70°C and 145°C, preferably between 80°C and 120°C, in particular of 120°C or, alternatively, between 90°C and 100°C.

Preferably, the modified bitumen is applied as molten modified bitumen. Preferably the molten modified bitumen is heated for the application to the first carrier material to a temperature of between 70°C to 300°C, preferably between 100°C and 250°C and more preferably between 125°C and 250°C. Alternatively, the modified bitumen can be applied to the first carrier material in form of a solution with an organic solvent or as an emulsion (cf. *supra).*

The modified bitumen is preferably applied to the first carrier material in a weight per unit area between 10 and 100 g/m². It is preferred to apply the modified bitumen to the first carrier material in a weight per unit area of between 20 g/m² and 100 g/m², further preferred of between 20 g/m² to 80 g/m² and more preferably of between 30 g/m² to 70 g/m² and further preferred of between 30 g/m² to 50 g/m².

The first carrier material is saturated or coated with the modified bitumen. In one embodiment, the first carrier material is coated with the modified bitumen, wherein the coating is applied to one side of the first carrier material. Alternatively, the coating is applied to said one side and, additionally, to the opposite side of the first carrier material. The first carrier material may be saturated with resin before being coated with bitumen. In such embodiments, the first carrier material is at first saturated with a resin and in a second step coated with the modified bitumen.

In a preferred embodiment, the first carrier material is saturated with the modified bitumen. The first carrier material is preferably saturated with the modified bitumen by applying the modified bitumen to one side of the first carrier material. In one embodiment, the modified bitumen does not penetrate to the opposite side of the first carrier material, i.e. no modified bitumen is present on said opposite side. Alternatively, the modified bitumen penetrates into the first carrier material such that the modified bitumen is present on said opposite side, too. Most preferably, saturation is performed with between 30 g/m² to 70 g/m², further preferred with between 30 g/m² to 50 g/m², further preferably with between 35 g/m² to 40 g/m² and most preferably with 35 g/m² of the modified bitumen.

A "carrier material" as used in the present invention is any material than can be coated or saturated with the modified bitumen and resin. The carrier material may generally be selected from the group consisting of paper, in particular kraft paper or sack paper, card board, glass fibre, textiles including woven and non-woven fabrics, plastics including rigid foam and foam plastic, mineral material such as ceramics or cellular concrete, metal such as metal foils, wood products, such as wood-based panels. Hence, a carrier material according to the present invention may consist of or comprise a material which is selected from the group consisting of paper, kraft paper, sack paper, glass fibre, card board, textile fabrics including woven and non-woven fabrics, plastics including rigid foam and foam plastic, mineral material such as ceramics or cellular concrete, metal such as metal foils, wood, wood-based panel or wood composite.

Preferably, a carrier material as used in the present invention constitutes a carrier layer, i.e. the first carrier material and/or the second carrier material is preferably present in form of a carrier layer, most preferably the first carrier material and the second carrier material are present in form of a carrier layer each. Preferably, the first carrier materials and the second carrier material consist of different materials. Preferably, the first carrier materials is paper, more preferably kraft paper, and the second carrier materials is a wood-based panel or a wood-based veneer.

The first carrier material is preferably a paper, in particular kraft paper.

As used herein the term "paper" is defined as a layered material mainly constituted of fibres, in particular derived from plants, in particular wood or grasses, or textiles. The paper preferably is kraft paper. According to the invention the paper preferably has a weight per unit area of between 40 g/m² and 250 g/m².

In a preferred embodiment, the first carrier material, in particular a kraft paper, has a weight per unit area between 50 g/m² and 200 g/m² and more preferably between 60 g/m² and 125 g/m² and most preferably of 80 g/m² or 110 g/m², in particular of 110 g/m².

The second carrier material is preferably a wood product, such as a wood-based panel, wood-based veneer including a veneer sheet or a wood composite, more preferably a wood-based panel or a wood-based veneer, in particular a wood-based panel. The wood-based panel may be, in particular, a birch or spruce plywood.

According to the invention the term "wood product" generally refers to any product formed comprising wood-based materials. Most preferred are wood-based veneers and wood-based panels. The wood-based panel includes wood, plywood, chipboard, fibre board, oriented strand board (OSB), glue wood, laminated veneer lumber (LVL), parallel strand lumber (PSL), oriented strand lumber (OSL), 3-layer boards or the like.

Within the present invention, the term "veneer" is defined as a layer with a thickness of usually not more than 2 cm or less, preferably 1.5 cm or less, more preferably 1 cm or less, more preferred less than 0.6 cm. Typically, it has a minimal thickness of 0.1 cm. However veneers with a thickness of about 0.1 mm exist. A veneer can be of any material, in particular of wood, paper metal or plastic. Most preferred the veneer is a wood product ("wood-based veneer").

As mentioned above the layered material according to the invention optionally comprises a synthetic resin. The term "resin" or "synthetic resin", respectively, as used according to the present invention is a generic term for synthetic substances given as liquids that can be cured or hardened into solids. Unless otherwise explicitly mentioned hereinafter the term "resin" is understood as "synthetic resin". Accordingly the terms "resin" and "synthetic resin" are used as synonyms in the context of the invention. Unless otherwise explicitly indicated this term encompasses "resin compositions", "unmodified or modified resins", thermoplastic resins and thermosetting resins. Preferred resins used according to the invention are thermosettings. Hence, the resin is preferably a thermosetting resin. A "thermosetting resin" is usually defined as a substance or composition that changes irreversibly into an infusible, insoluble polymer network by curing. In contrast, thermoplastics are usually defined as plastic materials, typically polymers that become pliable or mouldable above a specific temperature and solidify upon cooling.

Thermosetting resins include formaldehyde-based resins, acetal resins, polyester resins, vinylesters, acrylic resins or epoxy resins. The thermosetting resin may be an unmodified or a modified resin. For example the melamine-formaldehyde resin may be modified e.g. by glycol, caprolactam, acetoguanamine, benzoguanamine or p-toluene-sulphonamide, by alkylation or etherification.

The thermosetting resin is preferably a formaldehyde-based resin. The formaldehyde-based resin is preferably selected from the group consisting of melamine-formaldehyde resin (MF), phenol-formaldehyde resin (PF), urea-formaldehyde resin (UF), melamine-urea-formaldehyde resin (MUF), phenol-resorcinol-formaldehyde (PRF) or a combination thereof. Further preferably, the thermosetting resin is selected from MF, PF, a MF-PF blend, a PF-UF blend and a MUF and mixtures thereof. Especially preferred is the use of melamine-formaldehyde resin (MF) or a phenol-formaldehyde resin (PF) or mixtures thereof. Most preferred thermosetting resin is a PF resin.

The PF resin may be modified e.g. by urea, melamine, lignin, resorcinol, modified phenol, cresol, bisphenol or other equivalent compound. Any amino and phenolic resins known per se may be used for the formaldehyde-based resins. By combining different types of resins, e.g. phenolic and amino resins, together in a suitable ratio, it is possible to improve and optimize the properties of the resin. In the resin mixture, any solvent in which the resin is soluble may be used as the solvent for the resin.

The resin composition used can contain additives, e.g. selected from the group consisting of wax, surfactants, softeners, hardeners, wetting agents, anti-foam agents, diluents and/or alkali or mixtures thereof.

In a particular embodiment of the invention, the resin is applied onto the first carrier material, preferably in form of a resin layer. Thus, in this embodiment of the invention, the layered material comprises at least one resin layer applied onto the first carrier material. The at least one resin layer preferably represents an outermost layer of the layered material. The first carrier material then constitutes an intermediate layer between the second carrier material and the resin layer.

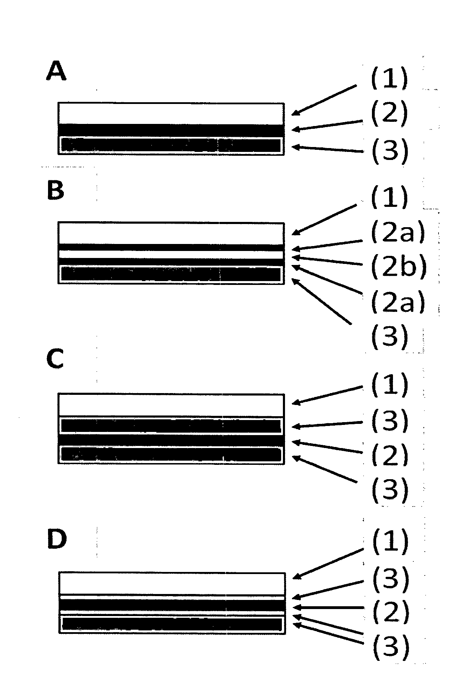

In such embodiment of the invention, the layered material preferably comprises and most preferably consists of the following layers: second carrier material, intermediate layer of first carrier material saturated with the modified bitumen, and resin layer as outermost layer (see Figure 3).

In a further preferred embodiment of the present invention, the layered material comprises, and most preferably consists of the following layers: second carrier material, intermediate layer of first carrier material coated with the modified bitumen, and resin layer as outermost layer (see Figure 3).

In an alternative embodiment of the present invention, the resin is applied to both sides of the first carrier material with the modified bitumen resulting in a layered material comprising or consisting of the following layers: second carrier material, resin layer, layer of first carrier material saturated with the modified bitumen, and further resin layer as outermost layer (see Figure 3).

In another embodiment of the present invention, the resin is applied to both sides of the first carrier material with the modified bitumen, wherein a further resin layer is attached forming the outermost layer of the layered material, resulting in a layered material comprising or consisting of the following layers: second carrier material, resin layer, layer of first carrier material saturated with the modified bitumen, resin layer, and further resin layer as outermost layer (see Figure 3). Preferably, the resin layers forming intermediate layers comprise an amount of between 10 g/m² to 15 g/m² resin in a weight per unit area, wherein the resin layer representing the outermost layer comprises an amount of between 120 g/m² and 140 g/m² of resin.

In a further embodiment, the layered material comprises and, in particular, consists of the following layers: second carrier material and layer of first carrier material, which is saturated with resin and further coated with the modified bitumen.

Notably, even in embodiments of the present invention having no resin layer between the first carrier material and the second carrier material further improved surface properties, in particular improved adhesion, were observed.

In one embodiment, the resin is applied to the first carrier material, preferably saturated with the modified bitumen, in a weight per unit area between 75 g/m² and 300 g/m², preferably between 100 g/m² and 250 g/m² and more preferably between 110 g/m² and 250 g/m², in particular between 120 g/m² and 240 g/m². Such amounts of resin further contribute to high service durability of the resulting layered material and facilitate processing and handling.

Preferably, the resin layer comprises or consists of a resin. In one embodiment the resin layer comprises paper, preferably kraft paper, which is saturated or coated with the resin. In such embodiment, the paper, preferably kraft paper, has a weight per unit area of between 30 g/m² and 250 g/m², preferably of between 35 g/m² and 125 g/m² and more preferably of between 40 g/m² and 100 g/m². The resin is preferably applied to the paper in a weight per unit area of between 60 g/m² and 200 g/m², more preferably of between 70 g/m² and 170 g/m² and most preferably of between 80 g/m² and 160 g/m². In one embodiment, the resin layer comprises paper with a weight per unit area of 40 g/m² and resin applied to the paper in a weight per unit area of 80 g/m². In an alternative embodiment the resin layer is a resin film consisting of resin and optionally additives.

The layered material according to the present invention may contain more than one resin layer, most preferably one resin layer. In alternative embodiments of the present invention, the layered material comprises at least two resin layers, preferably two resin layers or three resin layers, in particular three resin layers. In embodiments, in which the layered material of the present invention comprises at least two resin layers, the resin layers can comprise the same or, alternatively, different resins, preferably different resins. With these at least two resin layers the same amount of resin can be applied with each layer or, alternatively, the layers can comprise different amounts of resin. Preferably, the at least two, preferably three, resin layers comprise different amounts of resin. More preferably, at least one resin layer comprises in a weight per unit area between 75 g/m² and 300 g/m², preferably between 100 g/m² and 250 g/m² and more preferably between 110 g/m² and 250 g/m², in particular between 120 g/m² and 240 g/m² of resin; wherein at least one of the other resin layers present in the layered material comprises in a weight per unit area between 5 g/m² and 40 g/m² resin, preferably between 8 g/m² and 20 g/m² resin and in particular between 10 g/m² and 15 g/m² of resin. In an embodiment of the present invention, three resin layers are present within the layered material, wherein one resin layer comprises between 110 g/m² and 250 g/m², in particular between 120 g/m² and 240 g/m² of resin, which preferably represents the outermost layer of the layered material according to the present invention. In said embodiment, the remaining two resin layers, being preferably present as intermediate resin layers, comprise in a weight per unit area between 8 g/m² and 20 g/m² resin and in particular between 10 g/m² and 15 g/m² of resin. In one particular embodiment of the invention the resin on the first carrier material is cured, preferably completely cured, before the second carrier material, in particular a wood product, e.g. a veneer, is attached to the first carrier material. A curing prior attaching the second carrier material, e.g. the wood product, avoids extensive absorption of the resin into the second carrier material. The cured resin may establish the formation of an adhesive bond between the first carrier material and the second carrier material.

According to the invention the modified bitumen and the resin may be applied onto the first carrier material (cf. *supra)* together or separately. Thus, in a simplest embodiment of the invention, the layered material encompasses a first carrier material saturated with the modified bitumen and/or resin or having a layer which is formed by a composition of the modified bitumen and resin having been applied onto said first carrier material. Hence, according to this embodiment of the invention, the layered material comprises a first carrier material saturated with the modified bitumen and resin or coated with a layer comprising the modified bitumen and resin, said first carrier material being continuously directly or indirectly attached to a second carrier material. Preferably, both the modified bitumen and resin are applied to the first carrier material in a molten state or as a solution.

Alternatively, the modified bitumen and the resin are applied onto the first carrier material separately. Preferably, the carrier material is at first coated or saturated with the modified bitumen and, in a second step, is further coated or saturated with resin. In this embodiment the layered material comprises the carrier material saturated with the modified bitumen and optionally further saturated with a resin or a carrier material saturated with the modified bitumen or coated with the modified bitumen and with a further resin layer. Alternatively, the carrier material can be at first saturated with the resin and, in a second step, coated with the modified bitumen.

This first carrier material is attached to the second carrier material in order to form the layered material of the invention. This can be accomplished in a manner known *per se,* e.g. by hot pressing or by means of a hot-roller, preferably by hot-pressing.

In one embodiment of the invention, the first carrier material comprises or consists of carrier material, which is coated or saturated on one side with the modified bitumen; and which is further coated or saturated with a resin such as an adhesive resin.

In a preferred embodiment of the invention, the first carrier material comprises or consists of carrier layer consisting of paper, preferably with a weight per unit area of between 60 g/m² and 125 g/m²; which is coated or saturated with the modified bitumen, preferably with a weight per unit area of between 30 g/m² and 50 g/m², and which is further coated with a resin, preferably with a weight per unit area of between 110 g/m² and 250 g/m².

In another embodiment of the invention, the first carrier material comprises or consists of a carrier layer, preferably a paper or kraft paper, which is coated or saturated on one side with a resin, and which is coated or saturated on the opposite side with the modified bitumen, preferably with a weight per unit area of between 30 and 50 g/m².

In a further embodiment of the invention, the first carrier material comprises or consists of carrier layer, being preferably paper or kraft paper, which is coated or saturated with the modified bitumen on each side, wherein a resin coated or saturated on one of the bitumized sides is further present, which is thereby preferably forming the outermost layer.

In a still further embodiment of the invention, the first carrier material comprises or consists of carrier layer, being preferably paper or kraft paper, which is coated or saturated with the modified bitumen on each side of the carrier layer; wherein a resin coated or saturated on each bitumized side is further present, preferably therewith forming two outermost layers.

In a further embodiment of the invention, the first carrier is attached to a wood product, such as a veneer or a wood-based panel. The attachment/bonding between the wood product and the layered material may be achieved via the resin, preferably an adhesive resin, of the layered material.

Hence a specific embodiment according to the invention is a kraft paper saturated with the modified bitumen (in particular a molten modified bitumen), which is furthermore coated on its bitumized side with a phenolic resin. The resulting layered material (first carrier material) is then hot-pressed onto a wood product, preferably a wood-based panel (second carrier material).

In one embodiment of the invention, the layered material comprises or preferably consists of:
a) a second carrier material;
b) optionally a resin layer as intermediate layer between the second carrier material a) and the first carrier material c);
c) a first carrier material coated or saturated with the modified bitumen, as intermediate layer between resin layer b) or second carrier material a) and the resin layer d); and
d) optionally at least one resin layer preferably as outermost layer applied to the first carrier material saturated or coated with the modified bitumen of c).

Further layers may be present within the layered material according to the invention including "additional carrier layers" or "hydrophobic layers". In embodiments of the invention, an additional carrier layer or a hydrophobic layer is applied to the first carrier material of c) or the resin layer of d).

Said hydrophobic layer may comprise or consist of a compound selected from the group consisting of wax, oils, fats, fatty acids, alkanes, alkenes and their derivates and mixtures thereof, especially a compound selected from the group consisting of silicone oil, paraffin, stearin, stearic acid, alkene ketene dimer (AKD), alkenyl succinic anhydride (ASA), tall oil fatty acid and mixtures thereof. In particular said hydrophobic layer comprises or consists of paraffin or alkene ketene dimer (AKD). Suitable additional carrier layers comprise and, in particular, consist of paper such as kraft paper, which is optionally saturated with a resin.

In one embodiment, the additional carrier layer which is paper, in particular kraft paper, is applied to that side of the first carrier material of c) which is coated with the modified bitumen, wherein the additional carrier layer may further be saturated with a resin or further be coated with a resin layer of d). In an alternative embodiment, a hydrophobic layer consisting of wax is applied to that side of the first carrier material of c) which is coated with the modified bitumen. In said embodiment, the first carrier material is preferably saturated with a resin.

In a preferred embodiment of the invention the layered material comprises or preferably consists of:
a) a second carrier material which is a wood-based panel or a wood-based veneer;
b) a first carrier material, which is a paper and which is saturated with between 30 g/m² and 50 g/m² of the modified bitumen, as intermediate layer between second carrier material a) and resin layer c), and
c) a resin layer, wherein the resin is selected from the group consisting of a melamine-formaldehyde resin (MF), a phenol-formaldehyde resin (PF), an urea-formaldehyde resin (UF), a melamine-urea-formaldehyde resin (MUF), a phenol-resorcinol-formaldehyde (PRF) and a combination thereof.

In a most preferred embodiment with respect to the invention the layered material comprises and, in particular, consists of:
a) a second carrier material consisting of a wood-based panel or a wood-based veneer;
b) a first carrier material saturated with between 30 g/m² and 50 g/m² of the modified bitumen, as intermediate layer between second carrier material a) and resin layer c), wherein the first carrier material is kraft paper having a weight per unit area of between 60 g/m² to 125 g/m² and wherein the modified bitumen is a modified blown bitumen, and wherein the blown bitumen is modified by addition of between 4% by weight and 20% by weight of paraffin based on the amount of the modified bitumen; and
c) a resin layer, wherein the resin is applied to the first carrier material saturated with bitumen of b) in a weight per unit area between 110 g/m² and 250 g/m² and wherein the resin is selected from melamine-formaldehyde resin (MF), a phenol-formaldehyde resin (PF), a MF-PF blend, a PF-UF blend and a melamine-urea-formaldehyde resin (MUF) and mixtures thereof.

The first carrier material is coated or saturated with the modified bitumen, preferably saturated, and optionally coated or saturated with a resin. The modified bitumen and optionally the resin can be mixed before being coated onto the first carrier material. In this embodiment according to the invention the modified bitumen and the resin are applied onto the carrier material as one composition in a single-step-process, preferably both are present in a liquid form, in particular in a molten state or as a solution.

In an alternative embodiment with respect to the invention the first carrier material is at first coated or saturated with the modified bitumen and, in a second step, further coated or saturated with the resin. More preferably, the first carrier material is at first saturated with the modified bitumen and, in a second step, further coated with the resin. In such embodiment first carrier material with the modified bitumen and resin are provided and applied in separate processes, i.e. in a two-step process. According to this embodiment of the present invention, the modified bitumen and resin are applied separately to the first carrier material.

The modified bitumen and/or optionally the resin can be applied onto the first carrier material in a manner known *per se,* e.g. by hot pressing or by means of a hot-roller, preferably by hot-pressing.

The process for preparing a layered material of the present invention comprises the following steps:
a) providing a first carrier material, preferably in form of a carrier layer;
b) coating or saturating said first carrier material with the modified bitumen and optionally resin, wherein the modified bitumen is preferably in a liquid form, more preferably molten modified bitumen, to form bitumized first carrier material;
c) applying the material from step b) to a second carrier material by means of heat and pressure, preferably by hot pressing.

Step c) is preferably performed at a temperature of between 100°C and 200°C, preferably of between 110°C and 180°C, more preferably between 120°C and 150°C and most preferably at 135°C. The pressure applied in step c) is preferable between 5 bar and 25 bar more preferably of between 7 bar and 22 bar and most preferably of between 9 bar and 20 bar. By using temperatures or pressures which are too low, the resulting layered material may not provide the desired surface properties and an insufficient penetration of bitumen may be observed.

Temperature and pressure are preferably applied for at least 1 minute up to at most 20 minutes, more preferably at least 2 minutes and at most 15 minutes and most preferably at least 4 minutes and at most 10 minutes, in particular 5 minutes. In case the time period is too short, adhesion may be insufficient. To long processing may be accompanied by increased production costs and energy consumption. The same is true in case temperatures and pressures are used, which are too high.

Preferably, the process for preparing a layered material of the present invention comprises or consists of the following steps:
a) providing a first carrier material, preferably in form of a carrier layer;
b) coating or saturating said first carrier material with the modified bitumen, wherein the modified bitumen is preferably in a liquid form, more preferably molten modified bitumen, to form bitumized first carrier material;
c) optionally coating or saturating the bitumized first carrier material from step b) with a resin;
d) optionally curing the resin;
e) applying the material from step b) or the material from step c) or d) to a second carrier material by means of heat and pressure, preferably by hot pressing. The material from step c) or d) may be applied to the second carrier material with that side of the bitumized first carrier material that has not been coated or saturated with the resin or, alternatively, with that side of the bitumized first carrier material that has been saturated or coated with the resin. More preferably, the material from step c) or d) is applied to the second carrier material with that side of the bitumized first carrier material that has not been coated or saturated with the resin.

The modified bitumen of step b) and the resin layer of step c) may be applied in different steps using the same impregnation machine. In an alternative embodiment these steps are performed by separate impregnation machines.

Step e) is preferably performed at a temperature of between 100°C and 200°C. The pressure is preferably between 5 and 25 bar. Temperature and pressure are preferably applied for 1 minute to 20 minutes. Step e) is more preferably performed at a temperature of between 110°C and 180°C, more preferably between 120°C and 150°C and most preferably at 135°C. The pressure applied in step e) is more preferable between 7 bar and 22 bar and most preferably of between 9 bar and 20 bar. Temperature and pressure are more preferably applied for at least 2 minutes and at most 15 minutes and most preferably at least 4 minutes and at most 10 minutes.

In one embodiment with respect to the invention the process for preparing a layered material comprises or consists of the following steps:
a) providing a first carrier material, preferably in form of a carrier layer;
b) saturating said first carrier material with the molten modified bitumen, to form bitumized first carrier material;
c) coating the bitumized first carrier material from step b) with a resin;
d) optionally curing the resin;
e) applying the material from step c) or d) with that side of the bitumized first carrier material that has not been coated with the resin to a second carrier material by means of heat and pressure, preferably by hot pressing.

Step e) is preferably performed at a temperature of between 110°C and 180°C and a pressure of between 7 bar and 22 bar for 2 to 15 minutes.

In another embodiment with respect to the invention the process for preparing a layered material comprises the following steps:
a) providing a first carrier material, preferably in form of a carrier layer;
b) saturating said first carrier material with the molten modified bitumen, to form bitumized first carrier material;
c) applying the material from step b) to a second carrier material by means of heat and pressure, preferably by hot pressing;
d) coating the bitumized first carrier material from step c) with a resin;
e) optionally curing the resin.

Step c) is preferably performed at a temperature of between 110°C and 180°C and a pressure of between 7 bar and 22 bar for 2 to 15 minutes.

The invention further relates to a wood product comprising a layered material according to the invention.

### Figure legends

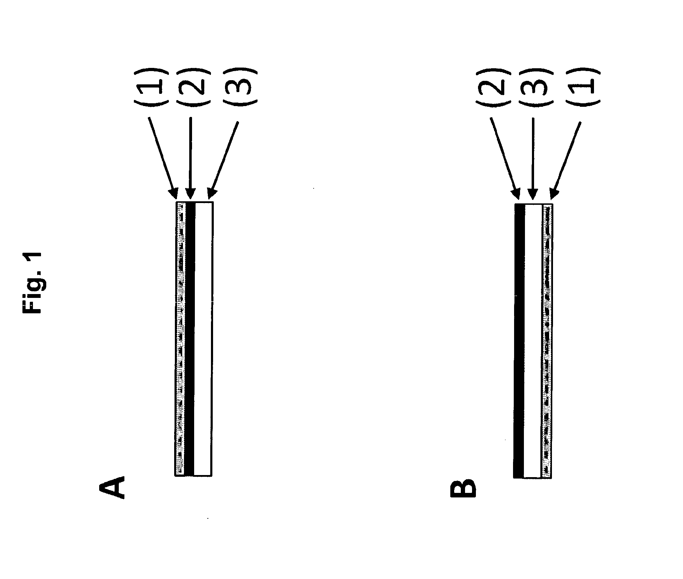

- Fig. 1:: **(A)** Schematic drawing of a component of the layered material according to the present invention showing a cross-section with the first carrier material (3), an intermediate bitumen layer of the modified bitumen (2) and an overlaying resin layer (1). **(B)** Schematic drawing of a component of the layered material according to the present invention showing a cross-section with an intermediate first carrier material (3), the overlying bitumen layer of the modified bitumen (2) and a lower resin layer (1).

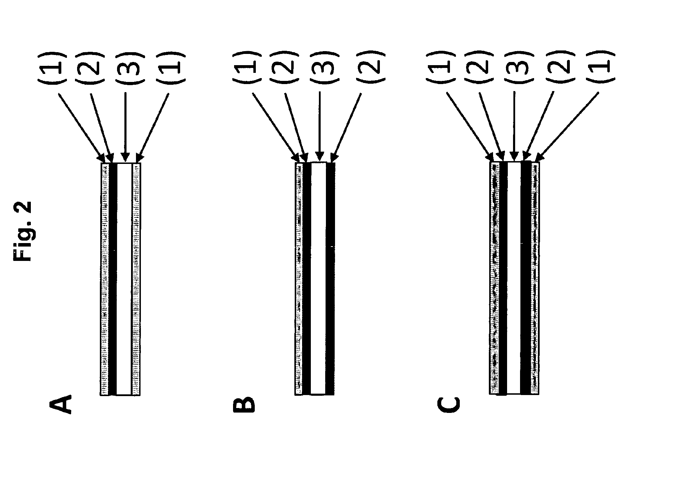

- Fig. 2:: **(A)** Schematic drawing of a component of the layered material according to the present invention showing a cross-section with a central first carrier material (3), an overlaying bitumen layer of the modified bitumen (2) and two outermost resin layers (1). **(B)** Schematic drawing of a component of the layered material according to the present invention showing a cross-section with an intermediate first carrier material (3), coated on each side with a bitumen layer of the modified bitumen (2) and further exhibiting an outer resin layer (1). **(C)** Schematic drawing of a component of the layered material according to the present invention showing a cross-section with an intermediate first carrier material (3), coated on each side with a bitumen layer of the modified bitumen (2) and further exhibiting two outermost resin layers (1).
- Fig. 3:: **(A)** Schematic drawing showing a cross-section of a layered material according to the invention with a first carrier material saturated with the modified bitumen (2), an overlaying outermost resin layer (3) and a second carrier material (1) **(B)** Schematic drawing showing a cross-section of a layered material according to the invention with a first carrier material (2b) coated on each side with the modified bitumen (2a), an overlaying outermost resin layer (3) and a second carrier material (1) **(C)** Schematic drawing showing a cross-section of a layered material according to the invention with a first carrier material saturated with the modified bitumen (2), coated on each side with a resin layer (3) and a second carrier material (1) **(D)** Schematic drawing showing a cross-section of a layered material according to the invention with a first carrier material saturated with the modified bitumen (2), coated on each side with a resin layer with an additional outermost resin layer (3) and a second carrier material (1).

### EXAMPLES

### Example 1: Preparation and testing of surface properties of layered materials according to the invention

### 1.1 Objective

The objective was to test four different types of layered materials (layered materials A to D). All layered materials are in accordance with the invention.

The layered materials are generated as follows:

First carrier material of all layered materials is 110 g/m² kraft paper, which has been saturated with blown modified bitumen (35 g/m²), wherein bitumen (Kerabit BIL 20/85, Nordic Waterproofing Oy) has been modified by the addition of 7% by weight of paraffin based on the amount of the modified bitumen. The second carrier material consists of a wood-based panel:
Layered material A: 9 mm/7 ply birch plywood
Layered material B: 9 mm/7 ply birch plywood
Layered material C: 18 mm/6 ply spruce plywood
Layered material D: 27 mm/3 ply 3-layer board

Layered materials A, C and D were further coated with 220 g/m² phenolic layer consisting of a 80 g/m² paper saturated with 140 g/m² phenolic resin, wherein layered material B was further coated with 220 g/m² melamine layer consisting of a 80 g/m² paper saturated with 140 g/m² melamine resin given the following layered structure: panel - bitumized paper-phenolic or melamine layer.

The following temperature and pressure has been used when applying bitumized paper and resin layer to the second carrier material, wherein both were applied at the same time in a one-step process:
Layered material A: 18 kg/cm² (corresponds to about 17.7 bar) - 6 min - 135°C
Layered material B: 18 kg/cm² (corresponds to about 17.7 bar) - 6 min - 135°C
Layered material C: 16 kg/cm² (corresponds to about 15.7 bar) - 6 min - 135°C
Layered material D: *12 kg/cm² (corresponds to about 11.8 bar) - 6 min - 135°C

### 1.2 Test setup

The following tests have been made to determine surface properties of the layered materials:

### Ripping test:

Rippling test is a test which describes the behavior of layered materials including coated panel surfaces when coating is damaged and exposed to moisture. The layered materials are allowed to cool down following their preparation before testing. Coating to be studied is artificially punctured by making holes of defined size into the surface structures, i.e. into the coated first carrier material up to the second carrier material. These holes have depth of 0.5 mm, 1 mm and 1.5 mm. Completely wet paper towel or cloth is placed on top of holes so that holes are in fully covered with water. Paper towel/cloth is kept wet during the duration of test, i.e. 2 and 3 hours, respectively. When test is completed paper towel/cloth is removed and surface wiped dry.

When water penetrates into wood, fibers swell causing phenomenon called rippling. Rippling is evaluated by measuring the length of swollen fibers (whiskers) after given test time. The obtained result is given as the length in mm of swelled wood grains around the hole: (diameter of the swelling area - diameter of the hole) = rippling result.

### Boiling test:

A boiling test has been carried out with the samples including boiling for 2 hours and evaluating the surface properties of the layered materials including swelling of wood fibers, blisters, delamination and color changes.

### Concrete test:

Cement is an alkaline material which etches surface structures if alkaline resistance or cure level is not sufficient.

Concrete test is carried out by mixing neat cement (standard Portland cement) with water so that consistent paste is formed. Cement paste is poured into a plastic cup and placed onto the surface structure, i.e. the layered materials, to be studied. Cement paste is allowed to dry for three days and removed. When removing the cement cake following properties are evaluated: sticking of cement onto the surface of the layered materials (surface with the first carrier material and the resin), possible change in surface structure because of cement (swelling, cracking, color change).

### Adhesion test:

This test is done with Elcometer 106 Pull Off Adhesion Tester and carried out as follows:

An adhesion test dolly is bonded to the layered material (surface with the first carrier material and the resin) using an adhesive (2K epoxy). The adhesive is allowed to dry and cure for 24 hours. If necessary dolly and surface is roughened with sand paper to ensure good bond between adhesive and surface or dolly.

The Elcometer 106 adhesion tester houses a spring arrangement which applies a lift force to the dolly as the tension is increased. When the coating is pulled off the surface, an indicator on the scale shows the numerical value of adhesion expressed in terms of the force per unit area required to remove the dolly (N/mm²). Inspection of the dolly face is required to determine the failure mode.

The following test conditions are used:
- either layered material after hot pressing when samples have been cooled down to room temperature (referenced to as "dry") or
- layered material after boiling and subsequent drying (referenced to as "boiling and drying"), i.e. the samples are boiled for 2 hours and allowed to dry for a minimum of 24 hours.

### Cracking test:

For this test, an additional coating is applied to the second carrier material as outermost layer to avoid warping of samples during testing. The resulting samples are cut to size of 100 mm x 100 mm and edges are sanded in order to remove possible cracks caused by machining tools. Minimum of three replicates are prepared.

The cracking test is a cyclic test consisting of following cycles:
- Water soak (20°C) for 8 hours; and
- Drying and heat treatment in hot (70°C) oven for 16 hours.

After heat treatment samples are allowed to cool at room temperature. Cracking (number of cracks, length of cracks) is evaluated after cooling. Test cycles are repeated as many times as needed to determine cracking tendency, i.e. cracking will not take place, layered material surface (surface without additional coating) is completely cracked or difference between test material and known reference is seen.

### 1.3 Results of tests

The results of the tests carried out are presented in table 1.

As evident from table 1, the test results reveal that there was no swelling after concrete test and no bubbling after carrying out the boiling test. Still further, all layered materials proved to provide good adhesion, i.e. adhesion values of between about 0.5 and 2.5 N/mm².

Besides, significantly reduced swelling after the ripping test was observed compared to the swelling of birch plywood solely coated with 220 g/m² phenolic film (phenolic film, AnyPress ®, which is approximately 100 mm. Cracking of layered materials C and D did not appear or the level was considered minimal which indicates a reduced stretching and contracting within the layered materials under the harsh conditions during the test.

Hence, layered materials according to the invention are suitable to provide surface properties allowing for an enhanced service durability of respective wood products. Besides, it has been shown that layered material according to the invention is easy to be coated and respective phenolic layer shows sufficient adherence.

**Table 1: Results with respect to surface properties**

| | **layered materials** | | | |
|---|---|---|---|---|
| **test** | **A** | **B** | **C** | **D** |
| boiling test | no bubbles | no bubbles | no bubbles | no bubbles |
| concrete test | no swelling | no swelling | no swelling | no swelling |
| adhesion test (dry) | 1.6 N/mm² | 0.8 N/mm² | 0.7 N/mm² | 1.1 N/mm² |
| adhesion test (boiling and drying) | * | 1.0 N/mm² | 0.4 N/mm² | 1.5 N/mm² |
| Cracking, 5 cycles | not tested | not tested | None | Minimal** |
| Rippling, 2 hours | 1*** = 13/10/10 mm | 1 = 19/57/30 mm | not tested | not tested |
| | 2 = 12/10/7mm | 2 = 6/6/6 mm | | |
| Rippling, 3 hours | 97/39/13 mm | 97/39/13 mm | not tested | not tested |

| | | | | |
|---|---|---|---|---|
| * test failed due to gluing of the test button. ** Gluing of layers started to fail during test causing one crack on sample *** 1 and 2 are replicate tests on same piece of plywood. | | | | |

### Example 2: Preparation and testing of further layered materials according to the invention

### 2.1 Objective

The objective was to test further types of layered structures (E to J). Layered materials F and G as well as I and J are in accordance with the invention.

The layered materials are generated as follows:

First carrier material of all layered materials is 110 g/m² kraft paper, which has been saturated with blown modified bitumen (35 g/m²), wherein bitumen (Kerabit BIL 20/85, Nordic Waterproofing Oy) was modified by the addition of paraffin in an amount of 7% by weight based on the amount of the modified bitumen. The second carrier material consists of a wood-based panel, namely a 40 x 40 panel of either 9 mm birch or 18 mm spruce.

The following layered structures were prepared:
Layered structure E and H: 3 layers of 120 g/m² phenolic film
Layered material F and I: bitumized paper - 2 layers of 120 g/m² phenolic film
Layered material G and J: layer of 120 g/m² phenolic film - bitumized paper - layer of 120 g/m² phenolic film

Pressing conditions as mentioned in example 1 were used.

### 2.2 Test setup

The following tests have been made to determine surface properties of the layered structures: Rippling test and adhesion test, which have been carried out as described in example 1.

### 2.3 Results of tests

The results of the tests carried out are presented in tables 2 and 3.

As evident from tables 2 and 3, the test results reveal that there was a significant reduction of swelling observed for the layered materials according to the present invention. In contrast, in layered structures E and H higher rate of swelling was measured. Still further, it is evident that adhesion is further increased in embodiments according to the present invention, in which first carrier material adheres to second carrier material without a resin layer between both carrier materials. Probably, inconsistent properties of wood as such may have contributed to the results measured for sample H.

**Table 2: Results with respect to surface properties - panel of birch**

| | **layered structures** | | |
|---|---|---|---|
| **test** | **E** | **F** | **G** |
| adhesion test (dry) | > 2.2 N/mm² | 1.45 N/mm² | 0.75 N/mm² |
| adhesion test (boiling and drying) | * | 1.0 N/mm² | 0.4 N/mm² |
| Rippling, 2 hours | 90/42/22 mm | 0/15/0 mm | 16/0/2 mm |

**Table 3: Results with respect to surface properties - panel of spruce**

| | **layered structures** | | |
|---|---|---|---|
| **test** | **H** | **I** | **J** |
| adhesion test (dry) | > 1.55 N/mm² | 1.6 N/mm² | 0.5 N/mm² |
| Rippling, 2 hours | 11/11/0 mm | 11/8/0 mm | 0/9/4 mm |

| | | | |
|---|---|---|---|
| * Gluing failure of button. | | | |

### Example 3: Preparation and testing of further layered materials according to the present invention

### 3.1 Objective

The objective was to test further layered structures, wherein layered materials K and L are in accordance with the invention.

The layered materials are generated as follows:

First carrier material of all layered materials is paper, which has been saturated with modified bitumen, wherein bitumen (Kerabit BIL 20/85, Nordic Waterproofing Oy) was modified by addition of paraffin. The second carrier material consists of a wood-based panel, namely birch plywood (7 ply, 9 mm birch plywood panel) or spruce plywood (6 ply, 18 mm spruce plywood panel). Further details of the three types of bitumen saturated paper selected for testing are presented in table 4.

**Table 4: types of bitumen saturated paper**

| **Sample** | **Paper weight, in g/m²** | **Paraffin in modified bitumen, in % by weight** | **Total weight of bitumen saturated paper, in g/m²** |
|---|---|---|---|
| K | 80 | 5 | 127 |
| L | 80 | 10 | 117 |
| M | 80 | 0 | 148 |

Bitumen saturated paper types K to M were coated on both sides with alkaline phenol-formaldehyde resin. Resin coating was dried in hot oven. The amount of resin was 10 to 15 g/m² (dry) on each side of the first carrier material saturated with bitumen. Resin coated, bitumen saturated paper samples were pressed on birch or spruce plywood onto the second carrier material by using the following pressing conditions (hot pressing) and placing a 120 g/m² resin layer (40 g/m² paper saturated with a phenolic resin to a total weight of 120 g/m²) on top of resin-bitumen paper. Pressing has been carried out in one step:
Hot pressing conditions:
   - 5 min - 18 kg/cm² (i.e. about 17.7 bar) - 135 C for birch plywood
   - 5 min - 14 kg/cm² (i.e. about 13.7 bar) - 135 C for spruce plywood

### 3.2 Test setup

The following tests have been made to determine surface properties of the layered structures K to M: Panels were tested for rippling and adhesion as described in example 1 with birch plywood and for adhesion with spruce plywood. Rippling and adhesion tests were carried out by pressing reference samples (220 g/m² phenolic surface film) side-by-side on the same piece of plywood. Rippling result is given and calculated as the reduction of rippling compared to reference sample on the same piece of plywood. Each type of bitumen saturated paper was tested with three different birch plywood samples, each sample having three individual rippling and adhesion measurements. Spruce plywood was tested with two different panels.

### 3.3 Results of tests

The results of the tests carried out are presented in tables 5 and 6.

As evident from these tables, the test results reveal an exceptional reduction of rippling, i.e. swelling, by the use of the layered materials according to the invention. Besides, good adhesion is measured, wherein further increase in adhesion is obtained with type K with bitumen modified with an amount of 5% by weight of paraffin based on the amount of modified bitumen. Insufficient adhesion was measured for Tape M with spruce panel, i.e. an adhesion below 0.5 N/mm².

**Table 5: Results with respect to surface properties - panel of birch**

| **Type of bitumen saturated paper** | **Sample** | **Rippling reduction, %** | | **Adhesion, N/mm²** |
|---|---|---|---|---|
| K | 1 | 88.1 | average value: 77.76 | 2.20 |
| K | 2 | 62.9 | | 2.40 |
| K | 3 | 82.3 | | 2.43 |
| L | 1 | 82.1 | average value: 76.26 | 1.60 |
| L | 2 | 73.1 | | 1.76 |
| L | 3 | 73.6 | | 1.86 |
| M | 1 | 66.2 | average value: 73.1 | 1.63 |
| M | 2 | 75.9 | | 1.56 |
| M | 3 | 77.2 | | 1.53 |

**Table 6: Results with respect to surface properties - panel of spruce**

| **Type of bitumen saturated paper** | **Sample** | **Adhesion, N/mm²** | **Wood failure, %** |
|---|---|---|---|
| K | 1 | 0.73 | 100 |
| K | 2 | 0.93 | 100 |
| L | 1 | 0.93 | 50 |
| L | 2 | 0.50 | 50 |
| M | 1 | 0.43 | 0 |
| M | 2 | 0.33 | 0 |

Wood failure is a common expression used in wood adhesion. 100% wood failure means that braking takes place within the wood, i.e. bonding surface is fully cover with wood fibers. 0% wood failure means that braking takes place so that wood surface is practically unchanged. When wood failure is 100% it is impossible to increase strength further, because the failure continues to take place within the wood. I.e. high wood failure is generally considered good as it indicates that the "coating" strongly adheres to the wood product or that high adherence of coating is achieved. With birch higher adhesion is obtained with the layered materials according to the invention while having sufficient wood failure. With spruce good adhesion is obtained, as well, with the layered materials according to the invention. There is no possibility to obtain further increased adhesion values because wood failure becomes limiting factor, reaches 100%. These tests show that the type of bitumen paper has significant effect on properties and that good results are obtainable with the layered materials according to the present invention.

### Example 4: Preparation and testing of different agents for modification of bitumen with respect to reduction of rippling

### 4.1 Objective

The objective was to test different agents for modification of bitumen by testing the effect of these agents by means of applying respective modified bitumen directly on plywood surface.

Test samples were prepared as follows:
- panel of 9 mm birch plywood,
- composition to be studied, i.e. bitumen in which the agent was added, was applied onto the plywood surface in a quantity of between 40 g/m² and 50 g/m²,
- said composition was applied as liquid and allowed to dry,
- 220 g/m² resin layer (phenolic resin) was pressed on the treated surface (18 kg/cm², which corresponds to about 17.7 bar, for 5 min at 135°C).

### 4.2 Test setup

Rippling test was performed as already described in examples 1 to 3.

Bitumen was Kerabit BIL 20/85 (Nordic Waterproofing Oy). Agents for modification of bitumen studied were paraffin (Sasolwax 5205), alkene ketene dimer (AKD), alkenyl succinic anhydride (ASA), silicone oil and stearic acid. Rippling is measured as a duplicate of three holes of different size. Rippling result is given as percentage of reduction of rippling and average of all measurements.

### 4.3 Results of tests

The results of the tests carried out are presented in table 7.

As evident from this table, the test results reveal a further reduction of rippling by the use of the agents tested. All agents performed well, wherein paraffin, stearic acid, AKD and silicone oil gave the best results, in particular 10% by weight of paraffin and 2% by weight of stearic acid based on the modified bitumen. The tests confirm that modification of bitumen by addition of the agents selected from paraffin, stearic acid, AKD, ASA and silicone oil allow for wood products having improved water resistance, i.e. reduced rippling.

**Table 7: Results with respect to rippling**

| **Sample** | **Parts of bitumen (Kerabit BIL 20/85)) (w/w)** | **Parts of paraffin (w/w)** | **Parts of silicone oil (w/w)** | **Parts of AKD (w/w)** | **Parts of ASA (w/w)** | **Parts of stearic acid (w/w)** | **Rippling reduction in %** |
|---|---|---|---|---|---|---|---|
| 1 | 98 | 0 | 2 | 0 | 0 | 0 | 51 |
| 2 | 90 | 0 | 10 | 0 | 0 | 0 | 47 |
| 3 | 98 | 0 | 0 | 2 | 0 | 0 | 41 |
| 4 | 90 | 0 | 0 | 10 | 0 | 0 | 51 |
| 5 | 98 | 0 | 0 | 0 | 2 | 0 | 27 |
| 6 | 90 | 0 | 0 | 0 | 10 | 0 | 33 |
| 7 | 98 | 0 | 0 | 0 | 0 | 2 | 75 |
| 8 | 90 | 0 | 0 | 0 | 0 | 10 | 32 |
| 9 | 90 | 10 | 0 | 0 | 0 | 0 | 70 |

## Claims

1. A layered material comprising a first carrier material and a second carrier material, wherein the first carrier material is coated or saturated with a modified bitumen and said first carrier material is continuously attached to the second carrier material, and wherein the modified bitumen is a bitumen, in which an agent selected from the group consisting of wax, silicone oil, stearic acid, alkene ketene dimer (AKD), alkenyl succinic anhydride (ASA) and mixtures thereof is added.

2. The layered material according to claim 1, wherein the first carrier material and the second carrier material form a composite material.

3. The layered material according to claim 1 or 2, whereas the modified bitumen has a softening point between 70°C and 145°C, preferably between 80°C and 120°C and more preferably between 90°C and 100°C.

4. The layered material according to any one of the preceding claims, whereby the bitumen which is modified is selected from the group consisting of hard bitumen, soft bitumen, straight run bitumen, high-vacuum bitumen, industrial bitumen, blown bitumen, blended bitumen, penetration bitumen and any mixtures thereof and bituminous products, bitumen emulsions and bitumen preparations thereof, preferably a blown bitumen.

5. The layered material according to any one of the preceding claims, wherein the modified bitumen is a bitumen, in which an agent selected from the group consisting of wax, silicone oil, stearic acid, alkene ketene dimer (AKD) and mixtures thereof is added, and wherein the amount of said agent is between 1% by weight and 20% by weight based on the amount of the modified bitumen.

6. The layered material according to any one of the preceding claims, whereby the modified bitumen is a bitumen, in which a wax, preferably paraffin, is added, and wherein the amount of wax is between 4% by weight and 20% by weight based on the amount of the modified bitumen.

7. The layered material according to any one of the preceding claims further comprising a resin.

8. The layered material according to claim 7, whereby the first carrier material is coated or saturated with the resin.

9. The layered material according to any one of claims 7 or 8, whereby the resin is selected from the group consisting of a melamine-formaldehyde resin (MF), a phenol-formaldehyde resin (PF), a MF-PF blend, a PF-urea-formaldehyde resin (UF) blend, a melamine-urea-formaldehyde resin (MUF) and mixtures thereof.

10. The layered material according to any one of the preceding claims, wherein the first carrier material is paper, preferably kraft paper.

11. The layered material according to any one of the preceding claims, whereas the first carrier material is kraft paper, and wherein the second carrier material is a wood-based panel or a wood-based veneer.

12. The layered material according to any one of the preceding claims comprising or preferably consisting of:
a) a first carrier material coated or saturated with the modified bitumen,
b) a second carrier material,
c) optionally a resin layer between the first and the second carrier material, and
d) at least one resin layer applied to the first carrier material of a) as outermost layer.

13. The layered material according to any one of the preceding claims comprising or preferably consisting of:
a) a paper as the first carrier material, preferably a kraft paper having a weight per unit area of 60 g/m² to 125 g/m² coated or saturated with between 30 g/m² and 50 g/m² of the modified bitumen,
b) a wood-based panel as the second carrier material, and
c) a resin layer, wherein the resin is preferably applied to the first carrier material of a) in a weight per unit area between 110 g/m² and 250 g/m² and wherein the resin is selected from the group consisting of a melamine-formaldehyde resin (MF), a phenol-formaldehyde resin (PF), a MF-PF blend, a PF-urea-formaldehyde resin (UF) blend, a melamine-urea-formaldehyde resin (MUF) and mixtures thereof.

14. Method for preparing a layered material according to any one of the preceding claims comprising the following steps:
a) providing a first carrier material, preferably in form of a carrier layer;
b) coating or saturating said first carrier material with the modified bitumen and optionally a resin, wherein the modified bitumen is preferably in a liquid form, more preferably molten modified bitumen, to form bitumized first carrier material;
c) applying the material from step b) to a second carrier material by means of heat and pressure, preferably by hot-pressing.

15. Method for preparing a layered material according to claim 14 comprising the following steps:
a) providing a first carrier material,
b) coating or saturating said first carrier material with the modified bitumen, preferably in a liquid form, more preferably molten modified bitumen, to form bitumized first carrier material,
c) optionally coating or saturating the first carrier material from step b) with a resin,
d) optionally curing the resin;
e) applying the material from step b), c) or d) to a second carrier material by
means of heat and pressure, preferably by hot-pressing,
wherein step e) is more preferably performed at a temperature of between 100°C and 200°C and a pressure of between 5 and 25 bar for 1 minute to 20 minutes.

16. Method according to claim 15, whereas step e) is performed at a temperature of between 110°C and 180°C and a pressure of between 7 and 22 bar for 2 minutes to 15 minutes.

17. A wood product comprising a layered material according to any one of claims 1 to 13.
